# EUROPEAN PATENT APPLICATION

(11) **EP 1 849 361 A1**
(43) Date of publication of application: **31.10.2007**
(21) Application number: 05824024.3
(22) Date of filing: 29.12.2005
(51) Int. Cl.: A01N 43/36

(54) **BIOLOGICAL CONTROL OF WEEDS USING THE METABOLITES OF ALTERNARIA ALTERNATA**

(30) Priority: 28.01.2005 CN 200510038263
(71) Applicant: Nanjing Agricultural University, Weigang Janjing, Jiangsu 210095 (CN)
(72) Inventor: QIANG, Sheng, Weigang Nanjing, Jiangsu 210095 (CN); DONG, Yunfa, Weigang Nanjing, Jiangsu 210095 (CN); AN, Chuanfu, Weigang Nanjing, Jiangsu 210095 (CN); ZHOU, Bing, Weigang Nanjing, Jiangsu 210095 (CN); ZHU, Yunzhi, Weigang Nanjing, Jiangsu 210095 (CN); CHEN, Shiguo, Weigang Nanjing, Jiangsu 210095 (CN); DAI, Xinbin, Weigang Nanjing, Jiangsu 210095 (CN); DAI, Baojiang, Weigang Nanjing, Jiangsu 210095 (CN); CAI, Jianguo, Weigang Nanjing, Jiangsu 210095 (CN)
(74) Representative: Korga, Leokadia
(86) International application number: PCT/CN2005/002367
(87) International publication number: WO 2006/079275

(57) **Abstract**

This invention teaches a method of controlling weeds using the metabolites tenuazonic acid, iso-tenuazonic acid and their salts isolated from the cultures of *Alternaria alternata* (Fr.) Keissler. Spraying of any of these compounds at a concentration of 5 to 800 µg/g can cause main broad leaf, grassy and sedge weeds to hurt, wilt, and dry to death. Tenuazonic acid, iso-tenuazonic acid, and their salts exhibit herbicidal activity with broad spectrum, quick killing, and high efficiency. The addition of adjuvants improves the herbicidal activity of these compounds.

## Description

### FIELD OF THE INVENTION

This invention relates to the biological control of a wide range of weed species by using metabolites of a strain of the fungus Alternaria alternata.

### DESCRIPTION OF THE RELATED ART

With the development of transgenic herbicide-resistant crops, the traditional chemical herbicides with high selectivity, narrow spectrum, and long efficacy will gradually lose applicability. New compounds with quick activity, broad-spectrum, low toxicity, and low remnant levels will be welcome in the herbicide market.

Metabolites of microorganisms or phytotoxins isolated from microorganisms (with the focus on the soil actinomycetes and plant pathogenic fungus) are used as herbicides to control weeds, which is one hotspot of the study and exploitation of herbicides such as bialaphos, herbimycin A, herbicidin and amismycin, etc., produced by Streptomyces sp.; AAL-toxin, tentoxin, alternaric acid and ACRL, etc., from Alternaria sp.; and ophiobolins, tryptophol and resorcylides etc coming from Drehslera sp. The broad-spectrum herbicide glufosinate, mimicly synthesized based on the structure of bialaphos, has been widely used in the field of transgenic glufosinate-resistant oil-seed rape.

Weeding activity of metabolites produced by Alternaria sp. has been documented. Specifically, inventors found that crude metabolites of the fungus can be applied to control weeds, and obtained Chinese patent No. ZL00112560.5. This invention illustrates the control of weeds using the pure compounds purified, isolated, and identified from the crude mixtures of metabolites. However, with respect to applying a monomer toxin purified from crude metabolites to control weeds, only the method of controlling weeds of with AAL-toxin has heretofor been described in a patent application. In the patent, the weeding activity of mixture and the toxin is noted; they are mostly aimed at broad leaf weeds such as nightshade, jimsonweed, redroot pigweed, northern jointvetch, but are inefficient to control Gramineae weeds. The mixture is the filtrated fluid obtained by filtrating the cultured mediums, such as corn powder or rice, having an effective concentration of beyond 1000 µg/g. Thus, its weeding region is not as wide as that according to this invention.

Tenuazonic acid and iso-tenuazonic acid isolated from Alternaria solid- and liquid-cultured mediums exhibit weeding activity and are isomeric compounds. Physical chemical characteristics of tenuazonic acid, iso-tenuazonic acid are as follows: the chemical formula is C₁₀H₁₅NO₃, and the state of matter is colorless viscous oil. Calcium tenuazonate, calcium iso-tenuazonate, magnesium tenuazonate, magnesium iso-tenuazonate, calcium tenuazono iso-tenuazonate, magnesium tenuazono iso-tenuazonate, copper tenuazono iso-tenuazonate, etc., are amorphous powders, very soluble in methanol, ethyl acetate, dimethyl sulfoxide, etc., and other organic solvents, slightly soluble in chloroform, benzene, glacial acetic acid, acetone, etc., poorly soluble in low polar solvents, such as ligroin, etc.

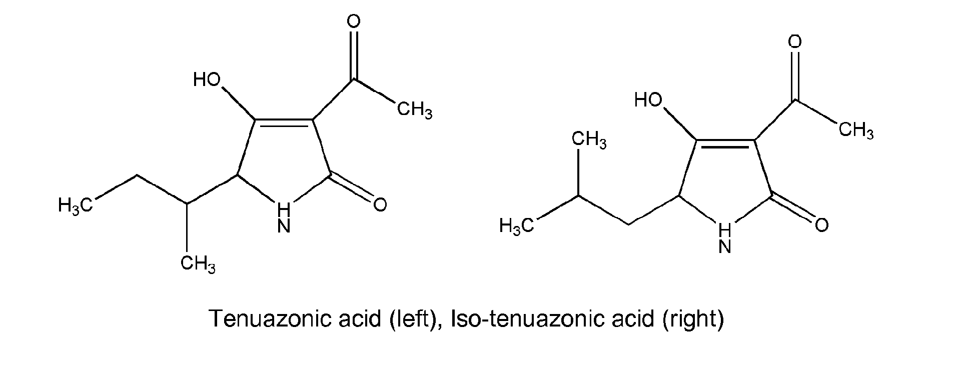

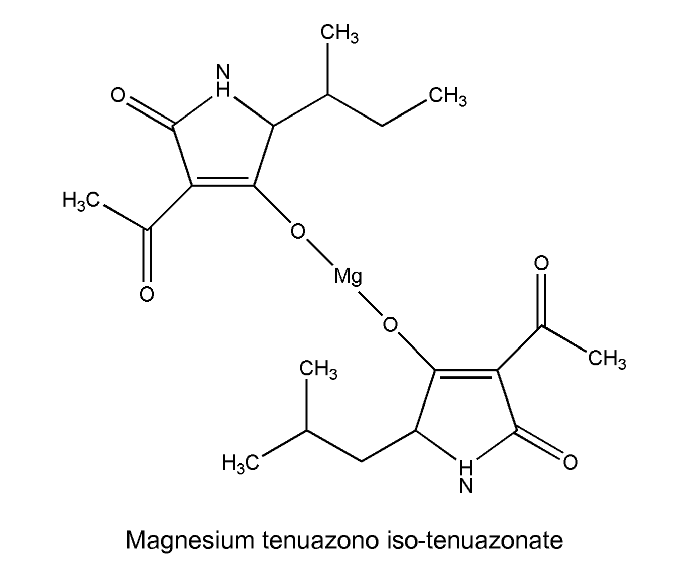

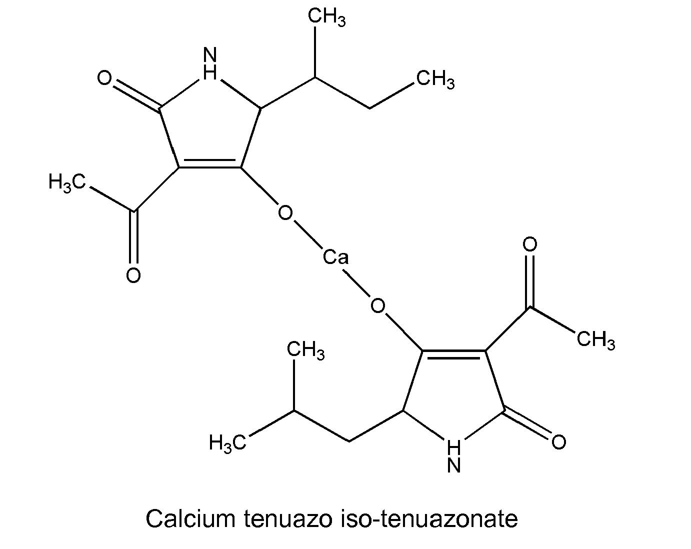

Tenuazonic and iso-tenuazonic acid, and their salts, are not only the metabolic products of *Alternaria* but also of other pathogenic fungi, such as Aspergillus flavus, Pyricularia oryzae, Eleusine coracana Gaertn., etc., which commonly infect apple, pepper, tomato, wheat, sorghum, seeds of sunflower, carrot, coleseed, olive, orange, tobacco, rice, etc., and foods containing cassava, tomato, etc.

The activity of tenuazonic acid and iso-tenuazonic acid has been illustrated in the literature. Tenuazonic acid and iso-tenuazonic acid can infect rice and tobacco plants forming brown spots; they can cause loss of chlorophyll and necrosis of tomato leaves; and can inhibit the seedling growth of tomato, rice, wheat, rye, and lettuce. Tenuazonic acid and iso-tenuazonic acid can inhibit the seminal germination and seedling growth of carrot. They have an inhibitory effect of around 50% at 10⁻⁴ mol/L on the seed germination of the parasitical weed Striga hermonthica. But with respect to that, tenuazonic acid and iso-tenuazonic acid kill not only via the inhibition of seed germination, but also directly by stem and leave treatment of the growing weeds.Weed species that can be controlled by methods of this invention include nearly all main weeds occurring in cropland, including the parasitical weed Striga hermonthica; a specific list of weeds follows below.

Particularly, calcium tenuazono iso-tenuazonate, magnesium tenuazono iso-tenuazonate, copper tenuazono iso-tenuazonate, and iron tenuazono iso-tenuazonate are new compounds of the invention.

### BRIEF DESCRIPTION OF THE INVENTION

In view of the above-described problems, it is one objective of the present invention to provide a method of biocontrol of weeds applying metabolic products of *Alternaria,* tenuazonic acid, iso-tenuazonic acid and their salts. At present, there are no broadly applied methods of biocontrol of weeds. Thus, the production structure of the herbicide and the industry structure of the pesticide chemistry will likely be changed with the developing of the technology of biocontrol of weeds bringing about industrialization of the method. The method of the invention kills weeds quickly; the weeds processed by the method show obvious symptoms after 24 hours, and the weeds can be killed in about 3 to 5 days. The method of biocontrolling weeds using tenuazonic acid, iso-tenuazonic acid, and their salts controls the main gramineous weeds in the farmland, such as common crabgrass, barnyardgrass, goosegrass, green foxtail, equal alopecurus, Japanese alopecurus, Beckmannia syzigachne Fern, wild oat, annual bluegrass, keng stiffgrass, common polypogon, and rabbitfoot polypogon; broad leaf weeds, such as crofton weed, copperleaf, yerbadetajo, redroot amaranth, tender catchweed bedstraw, narrowleaf vetch, sheathed monochoria, Indian rotala, water ammannia, purslane, flixweed tansymustard, shepherdspurse, common dayflower, wild cress, wormseed mustard, pennsylvania bittercress, geminate speedwell, mouse-ear chickweed; and sedges, such as needle spikesedge, difformed galingale, rice galingale, and dichotomous dimbristylis.

The compounds of the invention have high activity at concentrations as low as from 5 to 70 µg/g; thus they are highly efficacious biogenetic chemical herbicides.

In addition, the method has the advantage of low pollution to the environment, few byproducts, quick decomposition of active compounds after weed irradiation, and nearly no activity after the products are seeped into soil. Thus, as a biocontrol method, the method exhibits high environmental safety.

In one aspect, this invention teaches a method of applying metabolic products of *Alternaria,* tenuazonic acid, iso-tenuazonic acid, and their salts, to biocontrol weeds.

In one embodiment provided is a method of controlling weeds using tenuazonic acid, iso-tenuazonic acid, and/or their salts, comprising purifying tenuazonic acid, iso-tenuazonic acid and/or their salts by column or thin layer chromatography from the crude metabolites of solid or fluid cultures of *Alternaria alternata;* and spraying stems and leaves with the purified compounds at concentrations of from 5 to 800 µg/g of the purified compounds with respect to the weeds. The distinctly toxic symptoms are shown by the weeds within five days, and the weeds are completely killed shortly thereafter. Proper adjuvants added to the purified compounds elevate their weedkilling activity.

In the method of biocontrol the weeds using tenuazonic acid, iso-tenuazonic acid and/or their salts, the salts are selected, without limitation, from tenuazonic acid, calcium tenuazonate, calcium iso-tenuazonate, magnesium tenuazonate, magnesium iso-tenuazonate, copper tenuazonate, copper iso-tenuazonate, iron tenuazonate, iron iso-tenuazonate, sodium tenuazonate, sodium iso-tenuazonate, potassium tenuazonate, potassium iso-tenuazonate, and new compounds of calcium tenuazono iso-tenuazonate, magnesium tenuazono iso-tenuazonate, copper tenuazono iso-tenuazonate, or iron tenuazono iso-tenuazonate.

The method of biocontrol of weeds using tenuazonic acid, iso-tenuazonic acid and/or their salts is applicable, without limitations, to the main gramineous weeds, such as, common crabgrass, barnyardgrass, goosegrass, green foxtail, equal alopecurus, Japanese alopecurus, Beckmannia syzigachne Fern, wild oat, annual bluegrass, keng stiffgrass, common polypogon, rabbitfoot polypogon; broad leaf weeds, such as crofton weed, copperleaf, yerbadetajo, redroot amaranth, tender catchweed bedstraw, narrowleaf vetch, sheathed monochoria, Indian rotala, water ammannia, purslane, flixweed tansymustard, shepherdspurse, common dayflower, wild cress, wormseed mustard, pennsylvania bittercress, geminate speedwell, mouse-ear chickweed; and sedges, such as needle spikesedge, difformed galingale, rice galingale, dichotomous dimbristylis in the farmland, which shows a broad weeding activity.

In the method of biocontrol the weeds using tenuazonic acid, iso-tenuazonic acid and/or their salts, damage symptoms occurred after 12 hours of stem or leaf treatment; the stems and leaves contacting with the solution of compounds experienced chlorosis, wilt, dry rot, and even full plant death; for the growing plant, treatment caused brown spots on the stems or leaves, resulting in rotting or death. The most preferable treatment stage for spraying herbicides on the weeds is before the three leaf stage.

In the method of biocontrol the weeds using tenuazonic acid, iso-tenuazonic acid and/or their salts, the surface active agents, phytogenetic adjuvants, potency increasing agents and penetrating agents can be used together with the active compounds. The main adjuvants are without limitation JFC, SDL, tween-80, sodium dodecylsulfonate, NS GL-110, CGN-3, laurocapram, little 4204, and SDP.

In the method of biocontrol the weeds using tenuazonic acid, iso-tenuazonic acid and/or their salts, tenuazonic acid, iso-tenuazonic acid and/or their salts sigtnificantly reduce the photosynthetic oxygen evolution rate and apparent quantum efficiency. The main target site of the compounds is the thylakoid membrane, which inhibits electron transfer reaction of two photosystems.

During the study of biocontrol of Eupatorium coelestinum L., the inventors found that Eupatorium coelestinum L. naturally occurs in the field. The inventors isolated and identified its parasitical epiphytes, and obtained Alternaria alternata (Fr.) Keissler strain no. 501 after studying the respective pathogenicity and toxin-produced characteristics of the strains. The inventors further studied the biological characteristics, methods of culture, and techniques of vast production, pathogenicity and mechanism, and found that the main pathogenic mechanism of action rests on the production of pathogenic phytotoxins.

The inventors tested the cultured fluid, separated the fungus, and extracted the crude toxins. The inventors found that the compounds cause obvious toxic symptoms of weeds at the concentrations ranging from 1 to 1000 µg/mL in as quickly as 5 hours, and kill entirely weeds in two days. Tenuazonic acid, iso-tenuazonic acid and/or their salts were obtained by separating by gel column chromatogram and preparative thin layer chromatography crude metabolic products of solid- or liquid-cultured Alternaria. An activity test showed that the compounds were phytotoxic to the weeds and certain crops at concentrations between 5 and 800 µg/g. The compounds controlled well crofton weed, common crabgrass, beardless barnyardgrass and yerbadetajo (adding a little adjuvant in the treatment of the later weeds) by stem and leaf treatment. The compounds could inhibit efficiently the germination of seed radicles and embryos of weeds, such as common crabgrass, beardless barnyardgrass etc., affect the germinating power; and had some infection on the germination of seed radicles and embryos of certain crops, such as soybean, rice, wheat, corn, etc.

Inoculate the strain cultural blocks cultured in PDA to one kind of followed fluid culture medium.

PSK substrate: filter a slurry of 200g potato cooked in water (four layer gauzes), 30g sucrose, 1g K2HPO4, add water to 1 L.

SCSC substrate: 15g corn powder, 15g soybean powder, 30g sucrose, 3g CaCO3, add water to 1 L.

Or inoculate the strain cultured in the substrates above to the solid substrate RHWH:

RHWH substrate: 50g rice pollard, 50g wheat bran, 33.3mL water.

Liquid culture was incubated while stirring (110 r/m) an inoculated triangle flask for 5 to 8 days at 23°C to 26°C in darkness or 12 h/12 h (light/dark). The culture fluid was filtered through a filter paper. The filtrate was adsorbed by macropore resin, resolved by ethanol, concentrated in vacuo, extracted with ethyl acetate, concentrated in vacuo, and then the crude toxin was obtained. The solid culture was used to incubate an inoculated stainless steel basket for 8 to 10 days at 23°C to 26°C in darkness or 12 h/12 h (light/dark), and water and ethyl acetate were added to the cultured dry substance dried at 60°C according to the rate of 2:1:10 for cultured dry substance: water : ethyl acetate (m/v/v, unit: mL or g), and then distilled at reduced pressure to provide a distillate, finally distilled and concentrated at ordinary pressure to provide a crude toxin. The above crude toxin was isolated by gel column chromatography, and further purified by TLC. An orange yellow liquid of tenuazonic acid and iso-tenuazonic acid was obtained under acidic purification conditions. Amorphous powder of the salts of tenuazonic acid and iso-tenuazonic acid, such as calcium tenuazonate, calcium iso-tenuazonate, magnesium tenuazonate, magnesium iso-tenuazonate, sodium tenuazonate, sodium iso-tenuazonate, potassium tenuazonate, potassium iso-tenuazonate, and the new compounds of calcium tenuazono iso-tenuazonate, magnesium tenuazono iso-tenuazonate etc., could be obtained under neutral or alkaline condition. Adding copper acetate and iron acetate to the liquid of tenuazonic acid and iso-tenuazonic acid, respectively, resulted in copper tenuazonate, copper iso-tenuazonate, copper tenuazono iso-tenuazonate, iron tenuazonate, iron iso-tenuazonate, and iron tenuazono iso-tenuazonate, respectively.

Tenuazonic acid, iso-tenuazonic acid, and/or their salts were dissolved in a small amount of methanol and water was added to the liquid to a final concentration of between 5 and 40µg/g. A pathogenic test was conducted by placing the toxic liquid on the slightly wounded leaf of crofton weed with a needle. The test has shown that the pathogenic capability of tenuazonic acid and iso-tenuazonic acid with respect to crofton weed increases with the increase of concentration. The spot diameter was 4.9625 mm caused on the leaf of crofton weed after 48 hours at 40µg/g.

0.1% w/w adjuvants, such as JFC, SDL, tween-80, sodium dodecylsulfonate, NS GL-110, CGN-3, laurocapram, little 4204, or SDP, were added to a 35 µg/g solution of tenuazonic acid, or iso-tenuazonic acid. The adjuvants were selected according to their efficacy by dropping a solution of an active compound onto an isolated leaf segment on a plate. The result showed that eight adjuvants increased the pathogenic capability of tenuazonic acid and iso-tenuazonic acid with respect to the leaf of common crabgrass somewhat; moreover sodium dodecylsulfonate had the best efficiency. The reason for the improvement of efficacy is that the adjuvants allowed tenuazonic acid and iso-tenuazonic acid to sufficiently spread on the leaf of common crabgrass, enhance the penetrability, and promoted the transmission of the materials in vivo. Laurocapram and little 4204 also improved the efficiency of the active compounds.

Two formulations were developed: I. A liquid formulation comprising sodium dodecylsulfonate, laurocapram, little 4204, and 35µg/g tenuazonic acid and iso-tenuazonic acid (as salts); II. A liquid formulation comprising sodium dodecylsulfonate, laurocapram, TFC, and 35µg/g tenuazonic acid and iso-tenuazonic acid (salts). The two formulations were dropped on the ripe leaf of common crabgrass by the method of leaf drop in plate, the measured efficacy was improved by about five and six times, respectively.

The three-leaf stage weeds in the cropland, such as common crabgrass, goosegrass, barnyardgrass, yerbadetajo, copperleaf, small goosefoot, common dayflower, alligator alernanthera, redroot amaranth, prikly sowthistle etc., pot planted in the greenhouse, were stem and leaf treated. Obvious signs of injury were visible in certain weeds after 12 hours from the beginning of treatment. The leaves of the weeds experienced wilt and chlorosis after two to three days, and further experienced drying rot and death.

The seeds of common crabgrass, beardless barnyardgrass, keng stiffgrass, yerbadetajo, common vetch, wheat, corn, soybean and rice were treated with tenuazonic acid and iso-tenuazonic acid (salts) at concentrations between 5 and 70 µg/g. The result suggested that the compounds significantly inhibited elongation of radicles of common crabgrass, beardless barnyardgrass, rice and corn seeds and of embryos of rice and wheat seeds.

It is the effective mechanism of action of tenuazonic acid, and iso-tenuazonic acid (salts) on weeds that they can affect plant photosynthesis, significantly reduce the photosynthetic oxygen evolution rate and the apparent quantum efficiency. The main action site of the compounds is the thylakoid membrane, inhibiting electron transfer reaction of two photosystems, especially photosystem II, but no effect has been observed on the structure and synthesis of the membrane protein.

The main advantages and positive effects of the invention include:
1) The metabolic products of Alternaria were previously applied to biocontrol the weeds. That invention has been described in a previous patent application. However, the previous patent application did not describe the structures of particular active compounds. The mixtures described in previous applications did not yield good results for controlling the content of active components and the quality of products. This invention includes a further study and the progress based of the previous patent, the structures of the active compounds were identified after isolation and purification. Concentration and purification improved the efficiency and weeding effects of the compounds, and prominently decreased their dosage.
2) Because of their simple structures, tenuazonic acid and iso-tenuazonic acid (salts) are easily synthesized. The invention assured the wide weeding chart of the compounds to the cropland weeds, which can provide template for the chemical synthesized herbicides with analogous structures. Calcium tenuazono iso-tenuazonate, magnesium tenuazono iso-tenuazonate, copper tenuazono iso-tenuazonate, iron tenuazono iso-tenuazonate were the new compounds. Their biological activity has positive referent senses to the study on the physiological active mechanism of the compounds and to the chemical synthesis of herbicides.
   The structures of Alternaria toxins reported such as tentoxin, alternaric acid and ACRL are complicated, their synthesis is relatively difficult, and their cost is relatively high.
3) It has been reported that tenuazonic acid and iso-tenuazonic acid could induce brown spots on leaves of certain crops, e.g., rice, tomato, wheat, rye, lettuce, tobacco etc., and to inhibit the growth of the seedlings. Moreover, they have been reported to inhibit the seed germination of the parasitical weed Striga hermonthica. However, killing the main weeds in croplands has not been reported. In the methods of this invention, tenuazonic acid, iso-tenuazonic acid, and/or their salts in particular can control widely the weeds in fields, causing poisoning symptoms to crofton weed with a low concentration of 5 *µg*/*g,* and common crabgrass. They possess the characteristic of acting rapidly, at low dosages and delivering little pollution to the environment. They are highly efficient biogenic chemical herbicides, which develops their value in use and application prospect for biocontrolling weeds. Because of the rapid action of the compounds, they can be used as substitute products for the two destructive herbicides paraquat and glyphosate and can be applied on a large scale. Compared to the active compounds of the invention, the environmental toxicity of paraquat is higher, while glyphosate acts more slowly, killing weeds only after at least 10 days.
   In the present technology, the metabolite of Alternaria, AAL-Toxin is applied to control the weeds; it is most effective for broad leaf weeds, such as nightshade, jimsonweed, redroot pigweed, and northern jointvetch, but it is ineffective to Gramineae weeds. The methods and compounds of this invention can be used to control main weeds occurring in the farmland, such as Gramineae weeds, e.g., common crabgrass, barnyardgrass, goosegrass, green foxtail, equal alopecurus, Japanese alopecurus, Beckmannia syzigachne Fern, wild oat, annual bluegrass, keng stiffgrass, common polypogon, rabbitfoot polypogon; broadleaf weeds, e.g., crofton weed, copperleaf, yerbadetajo, redroot amaranth, tender catchweed bedstraw, narrowleaf vetch, sheathed monochoria, Indian rotala, water ammannia, purslane, flixweed tansymustard, shepherdspurse, common dayflower, wild cress, wormseed mustard, pennsylvania bittercress, geminate speedwell, mouse-ear chickweed; and sedges, e.g., needle spikesedge, difformed galingale, rice galingale, and dichotomous dimbristylis.
4) Tenuazonic acid, and iso-tenuazonic acid (salts) can control most main weeds in the field by stem or leaf treatment, and are convenient to use. Furthermore, the compounds are comparatively low pollutants due to their quick decomposition and inactivation after entering soil. The compounds have quite high environmental safety in view of their biodegradation.

### EXAMPLES

Example 1

21 natural variant strains of Alternaria alternata (Fr.) Keissler, the natural pathogen on Eupatorium adenophorum Spreng., were inoculated on the PDA culture medium, incubated for three days at 25°C in darkness, and then incubated for seven days at 30 cm under the 15W ultraviolet lamp, 12 h /12 h (light/dark), and then spore solution was obtained after washing the cultured medium with sterile water. 10⁵ spores were inoculated on 80 mL PSK substrate, and incubated for six days at 25°C at the rotate speed of 100 rpm. Culture liquid was filtrated through filter paper, and sterilized for 20 minutes at 121°C, provided for germfree filtrate. The third leaf was first cleared with water, and treated for 35 minutes with 0.1% HgCl₂, washed three times. The water on the leaf surface was blot up with sterilized filter paper. Needle puncturing at 1 to 2 cm away from the leaf edge resulted in slight wound, and 20 µL of germfree filtrate was imbibed to drop on the needle punctured location, at 25±1°C. After 12 hours, the spot diameter was measured under a dissecting microscope. Statistical analysis confirmed the difference of toxin production of the strains. The results are listed in Table 1.

The results listed in Table 1 suggest that the pathogenicity of four strains, NEW, new 402, new 501, an 501, are significantly higher than that of the other strains, and the pathogenicity of strain NEW is the highest. The amount of pathogenic toxins produced by the NEW strain is likely higher than that produced by the other strains; accordingly, this strain can be incubated for toxin production.

**Table 1**

| Strain | Diameter of spot (mm) | 5% difference | 1% difference |
|---|---|---|---|
| NEW | 5.138 | a | A |
| New 402 | 4.963 | a | AB |
| New 501 | 4.669 | b | B |
| 501 | 4.6235 | b | B |
| A po | 2.5865 | c | C |
| B | 2.401 | cd | CD |
| Original 503 | 2.3135 | d | CDE |
| 501-1 | 2.212 | de | DE |
| 402 | 2.1525 | de | DE |
| 501-4 | 2.002 | ef | EF |
| 501-J | 1.785 | f | F |
| 501-5 | 1.764 | f | F |
| Horse A | 1.141 | g | G |
| qs-503 | 1.092 | g | G |
| QZ-101 | 1.015 | g | G |
| AW | 0.91 | g | G |
| LS | 0.5775 | h | Hl |
| 501-3 | 0.5565 | h | Hl |
| 501-2 | 0.4165 | hi | Hl |
| YN | 0.3745 | hi | Hl |
| CK | 0.1855 | i | I |

Example 2

The 501 strain was inoculated in SCSC liquid substrate, incubated for 5 to 7 days at 25±1°C in 12h light /12h dark at the rotating speed of 110 rpm. Culture liquid was filtrated with filter paper, filtrate was centrifuged at high speed, supernatant fluid was filtrated with 0.45 *µ*m microaperture membrane for germfree filtrate. Gel column chromatography of 100 to 200 was discontinuously eluted with different solvent systems according to the polarity from low to high.

The order of elutropic solvent systems added in was petroleum → petroleum: ethyl acetate = 5:1 → petroleum: ethyl acetate = 3:1 → petroleum: ethyl acetate = 1:1 → petroleum: ethyl acetate = 1:3 → petroleum: ethyl acetate = 1:5 → ethyl acetate: methanol = 5:1 → ethyl acetate: methanol = 3:1 → ethyl acetate: methanol = 1:1 → ethyl acetate:methanol=1:3 → ethyl acetate:methanol=1:5 → methanol.

A second gel column chromatography was performed in a similar manner. The active portion eluted by petroleum: ethyl acetate = 5:1 and petroleum: ethyl acetate = 3:1 from the first gel column chromatogram was further purified by gel column chromatography of 100 to 200. The order of eluting solvent systems was as follows: petroleum: ethyl acetate = 3:1 → petroleum: ethyl acetate = 2:1 → petroleum: ethyl acetate = 3:2 → petroleum: ethyl acetate = 1:1 → ethyl acetate → ethanol. The eluents were concentrated, and diluted with water for bioactivity test, the active parts were loaded according to standard conditions on a gel board for TLC preparative isolation.

The active compounds purified column chromatography were dissolved in ethyl acetate, the solution was loaded as strip spot with capillary at the base of TLC preparative board, which was eluted with solvent and scraped respectively for installing the column. The column was eluted with ethyl acetate or ethanol until the loaded compounds have fully eluted. The chromatography conditions were changed to achieve separation of the active compounds. An orange brown liquid was obtained after being concentrated under normal pressure and acidic conditions. Finally, an amorphous orange solid powder was obtained after being concentrated under normal pressure at neutral or alkaline conditions.

Example 3

The mixture of tenuazonic acid and iso-tenuazonic acid was dissolved in a small amount of methanol, and was respectively diluted with distilled water to 5µg/g, 10µg/g, 15µg/g, 20µg/g, 25µg/g, 30µg/g, 35µg/g, 40 µg/g solutions. At the same time , methanol control and rinsing control of similar concentration were designed. A pathogenicity test was conducted with the method of needle puncture on Eupatorium adenophorum sprengel lamina. Every treatment was repeated six times. The spot diameters were measured with vernier caliper after being wetly incubated for 48 hours at 25°C in natural light.

The results in Table 2 show that the mixture of tenuazonic acid and iso-tenuazonic acid was highly pathogenetic to Eupatorium adenophorum sprengel. The toxicity was readily observable at 5µg/g, which was close to the toxicity of the germfree filtrate, but the difference with control was best apparent (P<0.01).

**Table 2**

| Treatment | Average (mm) | 5% difference | 1% difference |
|---|---|---|---|
| Rinsing CK | 0.27675 | h | H |
| Solvent CK | 0.288 | h | H |
| Germfree filtrate | 0.7065 | g | G |
| 5 µg/g | 0.798 | g | FG |
| 10 µg/g | 0.972 | f | F |
| 15 µg/g | 1.197 | e | E |
| 20 µg/g | 1.31 | de | DE |
| 25 µg/g | 1.434 | d | D |
| 30 µg/g | 4.316667 | c | C |
| 35 µg/g | 4.688889 | b | B |
| 40 µg/g | 4.9625 | a | A |

Example 3

Magnesium tenuazonate, magnesium iso-tenuazonate and magnesium tenuazono iso-tenuazonate were dissolved in a small amount of methanol, and then were diluted with distilled water to 50 µg/g solutions. At the same time, methanol control and rinsing control of similar concentration were designed. The pathogenicity test was conducted with the method of needle puncture on Eupatorium adenophorum spreng lamina. Every treatment was repeated six times. The spot diameters were measured with vernier caliper after being wetly incubated for 48 hours at 25°C in natural light.

The results in Table 3 show that magnesium tenuazonate, magnesium iso-tenuazonate and magnesium tenuazonate iso-tenuazonate were high pathogenetic to Eupatorium adenophorum spreng, the toxicity was already obvious at 50µg/g, which was apparently higher than the toxicity of germfree filtrate, the difference was best apparent (P<0.01).

**Table 3**

| Treatment | Average (mm) | 5% difference | 1% difference |
|---|---|---|---|
| Rinsing CK | 0.27675 | b | B |
| Solvent CK | 0.288 | b | B |
| Germfree filtrate | 0.7065 | b | B |
| Magnesium tenuazonate | 2.78 | a | A |
| Magnesium iso-tenuazonate | 2.972 | a | A |
| magnesium tenuazonate iso-tenuazonate | 3.197 | a | A |

Example 4

The solution of 35 µg/g tenuazonic acid and iso-tenuazonic acid (salts) was blended respectively with 0.1 % JFC, SDL, tween-80, sodium dodecylsulfonate, NS GL-110, CGN-3, laurocapram, little 4204, SDP, the eight adjuvants were selected according to the action of them to the efficacy display of the compounds by dropping the liquid on the isolated leaf segment in plate. At the same time, rinsing control CK0, 0.1 % adjuvant control CK1, 35µg/g tenuazonic acid and iso-tenuazonic acid (salts) solution control CK2 were designed, every treatment was repeated six times. The result was analyzed and listed in Table 4, the results showed that the adjuvants increased somewhat the pathogenity of tenuazonic acid, iso-tenuazonic acid (salts) to the leaf of common crabgrass, sodium dodecylsulfonate had the best efficiency, it could make tenuazonic acid and iso-tenuazonic acid sufficiently spread on the leaf of common crabgrass to enhance the penetrability, promote the transmission of the materials in vivo. Laurocapram and little 4204 also had better efficiency.

**Table 4**

| 0.1% concentration | JFC | SDL | tween-80 | Sodium dodecylsulf onate | NS GL-110 | CGN-3 | laurocap ram | little4 204 |
|---|---|---|---|---|---|---|---|---|
| CK0 | 0 | 0 | 0 | 0 | 0 | 0 | 0 | 0 |
| (mm) | 0 | 0 | 0 | 0 | 0 | 0 | 0 | 0 |
| CK1 | 3.882 | 3.882 | 3.882 | 3.882353 | 3.882 | 3.882 | 3.88235 | 3.882 |
| (mm) | 353 | 353 | 353 | 12.875 | 353 | 353 | 3 | 353 |
| CK2 | 4.6 | 4.7 | 5.655 | | 7.9 | 4.485 | 11.0714 | 11.6 |
| (mm) | | | 556 | | | 714 | 3 | |
| Treatment | | | | | | | | |
| (mm) | | | | | | | | |

Example 5

Two formulations were dropped on the ripe leaf of common crabgrass by the method of leaf drop in plate, rinsing control CK0, adjuvant control CK1, 35 µg/g tenuazonic acid and iso-tenuazonic acid (salts) solution control CK2 were designed. Every treatment was repeated sixteen times. The concentrations of adjuvants in the two formulations were both 0.1 %. The results are listed in Table 5.

Two formulations were designed. Formulation I: a liquid formulation comprising adjuvantsD, adjuvants G, adjuvants H, and 35 µg/g tenuazonic acid, iso-tenuazonic acid (salts); Formulation II : a liquid formulation comprising adjuvantsD, adjuvants G, adjuvants A, and 35 µg/g tenuazonic acid, iso-tenuazonic acid (salts).

The results in Table 5 show that formulation I increased the toxicity of tenuazonic acid, iso-tenuazonic acid (salts) about 5 times, but was not so good as formulation II. The increase in toxicity of formulation II is more pronounced, over 6 times, which is higher (P<0.01) than that of formulation I.

**Table 5**

| Treatment | Average of spot diameter (mm) | 5% difference | 1% difference |
|---|---|---|---|
| CK0 | 0 | d | D |
| CK1 I | 0 | d | D |
| CK1 II | 0 | d | D |
| CK2 | 3.88 | c | C |
| Formulation I | 18.28 | b | B |
| Formulation II | 30.26 | a | A |

Example 6

The three leaf stage weed seedlings planted in pot in greenhouse were stem or leaf treated with formulation II of Example 4.The solution properly wetted the surface of weed stem and leaf. Every treatment was repeated three times. At the same time, rinsing control CK1 and adjuvant control CK2 were designed. The state of disease was statistically assessed after two days. The statistical criterion of the disease state is shown in Table 6. Statistical results are listed in Table 7.

The results in Table 7 suggest that formulation II can control the main weeds in the cropland, such as Digitaria sanguinalis, Eleusine indica, Echinochloa crusgalli, Eclipta prostrata, Acalypha australis, Chenopodium serotinum, Commelina communis, Alternanthera philoxeroides, Amaranthus retroflexus, Calystegia hederacea, Sonchus oleraceus etc. The most preferable treatment period for spraying herbicides on the weeds is before the three leaf stage.

**Table 6**

| Disease level | Damage level |
|---|---|
| 4 | Plant completely dead |
| 3 | Two third of the plant stems and leaves dried rot |
| 2 | Half of the plant stems and leaves dried rot |
| 1 | One third of the plant stems and leaves dried rot |
| 0 | Plant is well, no damage |

**Table 7**

| Family | Plant species | CK1 | CK2 | Formulation II |
|---|---|---|---|---|
| Gramineae | Eleusine indica | 0 | 0 | 2 |
| | Setaria viridis | 0 | 0 | 3 |
| | Digitaria sanguinalis | 0 | 0 | 4 |
| | Echinochloa crusgalli | 0 | 0 | 3 |
| | Coix lacryma-jobi | 0 | 0 | 2 |
| Amaranthaceae | Amaranthus retroflexus | 0 | 0 | 2 |
| | Alternanthera philoxeroides | 0 | 0 | 4 |
| | Amaranthus spinosus | 0 | 0 | 1 |
| Malvaceae | Hibiscus syriacus | 0 | 0 | 2 |
| | Abutilon theophrasti | 0 | 0 | 1 |
| Polygonaceae | Polygonum lapathifolium | 0 | 0 | 3 |
| | Rumex japonicus | 0 | 0 | 0 |
| | Polygonum perfoliatum | 0 | 0 | 3 |
| | Polygonum hydropiper | 0 | 0 | 3 |
| | Rumex dentatus | 0 | 0 | 2 |
| Euphorbiaceae | Acalypha australis | 0 | 0 | 2 |
| Verbenaceae | Vitex negundo var. cannabifolia | 0 | 0 | 1 |
| Cannabinaceae | Humulus scandens | 0 | 0 | 1 |
| Labiatae | Perilla frutescens | 0 | 0 | 1 |
| | Salvia splendens | 0 | 0 | 0 |
| | Lamium amplexicaule | 0 | 0 | 1 |
| | Mosla scabra | 0 | 0 | 1 |
| Scrophulariaceae | Veronica didyma | 0 | 0 | 1 |
| | Veronica persica | 0 | 0 | 0 |
| Commelinaceae | Commelina communis | 0 | 0 | 4 |
| | Commelina bengalensis | 0 | 0 | 4 |
| Convolvulaceae | Calystegia hederacea | 0 | 0 | 4 |
| | Dichondra repens | 0 | 0 | 1 |
| | Pharbitis nil | 0 | 0 | 2 |
| Compositae | Tagetes erecta | 0 | 0 | 1 |
| | Xanthium sibiricum | 0 | 0 | 2 |
| | Conyza canadensis | 0 | 0 | 2 |
| | Eclipta prostrata | 0 | 0 | 3 |
| | Sonchus oleraceus | 0 | 0 | 3 |
| | Aster ageratoides var. scaberulus | 0 | 0 | 4 |
| | Youngia japonica | 0 | 0 | 1 |
| | Sonchus asper | 0 | 0 | 1 |
| | Zinnia elegans | 0 | 0 | 1 |
| | Erigeron annuus | 0 | 0 | 3 |
| | Ambrosia artemisiifolia | 0 | 0 | 1 |
| | Carpesium abrotanoides | 0 | 0 | 0 |
| | Eupatorium adenophorum | 0 | 0 | 4 |
| Leguminosae | Trifolium pratense | 0 | 0 | 1 |
| Rosaceae | Duchesnea indica | 0 | 0 | 1 |
| Vitaceae | Cayratia japonica | 0 | 0 | 2 |
| | Parthenocissus tricuspidata | 0 | 0 | 2 |
| Chenopodiaceae | Chenopodium serotinum | 0 | 0 | 2 |
| Oxalidaceae | Oxalis corniculata | 0 | 0 | 4 |
| Plantaginaceae | Plantago asiatica | 0 | 0 | 0 |
| Cyperaceae | Cyperus rotundus | 0 | 0 | 3 |
| | Cyperus difformis | 0 | 0 | 4 |
| | Fimbristylis miliacea | 0 | 0 | 3 |

Example 7

Tenuazonates and iso-tenuazonates were dissolved in a small amount of methanol, and then diluted with distilled water to obtain 5 µg/ml, 50 µg/ml, 500 µg/ml solutions. The three leaf stage digitaria sanguinalis and eclipta prostrata seedlings planted in pots in a greenhouse were sprayed on stem or leaves with the obtained solution. The solution was used to properly wet the surface of the weed stems and leaves. The treatment process is repeated for three times. At the same time, rinsing control CK is designed. The state of disease is statistically assessed after two days. The statistical criterion of disease state is shown in Table 6. Statistical results are listed in Table 8.

The results in Table 8 suggest that tenuazonates and iso-tenuazonates between 50*µg*/*ml* to 500 *µg*/*ml* can control the representative Gramineae weed Digitaria sanguinalis and broad leaf weed Eclipta prostrata in the cropland, and that the most preferable treatment period for spraying herbicides on the weeds is before the three leaf stage.

**Table 8**

| Salt | Weed | CK | 5 µg/mL | 50 µg/mL | 500 µg/mL |
|---|---|---|---|---|---|
| calcium tenuazonate | *Digitaria sanguinalis* | 0 | 1 | 4 | 4 |
| | *Eclipta prostrata* | 0 | 1 | 3 | 4 |
| magnesium tenuazonate | *Digitaria sanguinalis* | 0 | 1 | 4 | 4 |
| | *Eclipta prostrata* | 0 | 1 | 3 | 4 |
| copper tenuazonate | *Digitaria sanguinalis* | 0 | 1 | 4 | 4 |
| | *Eclipta prostrata* | 0 | 0 | 2 | 4 |
| iron tenuazonate | *Digitaria sanguinalis* | 0 | 1 | 4 | 4 |
| | *Eclipta prostrata* | 0 | 0 | 2 | 4 |
| sodium tenuazonate | *Digitaria sanguinalis* | 0 | 1 | 4 | 4 |
| | *Eclipta prostrata* | 0 | 1 | 3 | 4 |
| potassium tenuazonate | *Digitaria sanguinalis* | 0 | 1 | 4 | 4 |
| | *Eclipta prostrata* | 0 | 1 | 3 | 4 |
| calcium iso-tenuazonate | *Digitaria sanguinalis* | 0 | 1 | 3 | 4 |
| | *Eclipta prostrata* | 0 | 1 | 3 | 4 |
| magnesium iso-tenuazonate | *Digitaria sanguinalis* | 0 | 1 | 3 | 4 |
| | *Eclipta prostrata* | 0 | 1 | 2 | 4 |
| copper iso-tenuazonate | *Digitaria sanguinalis* | 0 | 1 | 2 | 4 |
| | *Eclipta prostrata* | 0 | 0 | 3 | 4 |
| iron iso-tenuazonate | *Digitaria sanguinalis* | 0 | 1 | 3 | 4 |
| | *Eclipta prostrata* | 0 | 0 | 2 | 4 |
| sodium iso-tenuazonate | *Digitaria sanguinalis* | 0 | 1 | 4 | 4 |
| | *Eclipta prostrata* | 0 | 1 | 4 | 4 |
| potassium iso-tenuazonate | *Digitaria sanguinalis* | 0 | 1 | 3 | 4 |
| | *Eclipta prostrata* | 0 | 1 | 4 | 4 |
| calcium tenuazono iso- | *Digitaria sanguinalis* | 0 | 1 | 3 | 4 |
| tenuazonate | *Eclipta prostrata* | 0 | 1 | 3 | 4 |
| magnesium tenuazono iso- | *Digitaria sanguinalis* | 0 | 1 | 3 | 4 |
| tenuazonate | *Eclipta prostrata* | 0 | 1 | 3 | 4 |
| copper tenuazono iso- | *Digitaria sanguinalis* | 0 | 1 | 2 | 4 |
| tenuazonate | *Eclipta prostrata* | 0 | 1 | 3 | 4 |
| iron tenuazono iso-tenuazonate | *Digitaria sanguinalis* | 0 | 1 | 2 | 3 |
| | *Eclipta prostrata* | 0 | 1 | 2 | 3 |

Example 8

The mixture of tenuazonic acid and iso-tenuazonic acid was dissolved in a small amount of methanol, and was respectively diluted with distilled water to 5µg/ml, 8.75 µg/ml, 17.5 µg/ml, 35 µg/ml, 70 µg/ml solutions, which were used in the experiment of inhibition on seed germination of Digitaria sanguinalis, Echinochloa crusgalli var. praticola, Sclerochloa kengiana, Eclipta prostrata, Vicia sativa, Triticum aestivum, Zea mays, Glycine max, Oryza sativa. The seeds were first cleared with tap water, secondly, treated for three to five minutes with 0.1 % HgCl₂; the surface wet was blot up with sterile filter paper after being cleared with germfree water. Every treatment was repeated three times. In every repeat, the number of plant seeds used was 100 grains except for the seeds of wheat, corn, soybean and rice of which the number was 30 grains. At the same time, rinsing control CK was designed. The experiment was conducted in a dish, the diameter of which was 9 cm, the dosage of the solution or control compounds in every dish was 5 ml, the plants were incubated in illuminating incubator, 12 h light/12 h dark. The germination rate (radicle was as long as the seed) was statistically assessed five days later for wheat, corn, soybean and rice, and ten days later for the other plants; the buds length and roots length were measured. The results are shown in Table 9.

**Table 9**

| | | CK | 5 µg/g | 8.75 µg/g | 17.5 µg/g | 35 µg/g | 70 µg/g |
|---|---|---|---|---|---|---|---|
| *Digitaria* | Germination rate (%) | 73 | 36 | 18 | 9 | 0 | 0 |
| *sanguinalis* | Radicle length (cm) | 4.01 | 1.08 | 0.40 | 0 | 0 | 0 |
| | Embryo length (cm) | 1.28 | 0.75 | 0.95 | 0.81 | 0.23 | 0 |
| *Echinochloa* | Germination rate (%) | 80 | 73 | 47 | 22 | 14 | 17 |
| *crusgalli* var. *praticola* | Radicle length (cm) | 2.91 | 0.52 | 0.06 | 0 | 0 | 0 |
| | Embryo length (cm) | 4.16 | 4.12 | 3.12 | 2.46 | 2.18 | 1.89 |
| *Sclerochloa* | Germination rate (%) | 92 | 92 | 92 | 85 | 65 | 7 |
| *kengiana* | Radicle length (cm) | 5.95 | 6.88 | 5.35 | 2.57 | 0 | 0 |
| | Embryo length (cm) | 6.50 | 7.53 | 7.58 | 6.55 | 2.24 | 0.60 |
| *Eclipta prostrata* | Germination rate (%) | 80 | 84 | 87 | 78 | 34 | 0 |
| | Radicle length (cm) | 0.82 | 0.92 | 0.92 | 0.32 | 0.06 | 0 |
| | Embryo length (cm) | 0.99 | 1.03 | 1.04 | 0.55 | 0.22 | 0 |
| *Vicia sativa* | Germination rate (%) | 81 | 73 | 53 | 33 | 10 | 0 |
| | Radicle length (cm) | 0.52 | 0.42 | 0.46 | 0.39 | 0.13 | 0 |
| | Embryo length (cm) | 1.65 | 1.21 | 1.22 | 0.42 | 0.04 | 0 |
| *Triticum aestivum* | Germination rate (%) | 100 | 100 | 98 | 89 | 59 | 0 |
| | Radicle length (cm) | 4.68 | 5.01 | 2.54 | 1.47 | 0.08 | 0 |
| | Embryo length (cm) | 3.81 | 4.58 | 2.56 | 2.00 | 0.60 | 0 |
| *Zea mays* | Germination rate (%) | 98 | 98 | 75 | 78 | 78 | 75 |
| | Radicle length (cm) | 8.28 | 6.44 | 4.76 | 1.52 | 0.84 | 0.35 |
| | Embryo length (cm) | 2.71 | 3.42 | 2.72 | 2.26 | 1.66 | 1.82 |
| *Glycine max* | Germination rate (%) | 75 | 95 | 100 | 90 | 95 | 75 |
| | Radicle length (cm) | 5.51 | 3.13 | 4.48 | 5.66 | 3.04 | 0 |
| | Embryo length (cm) | 4.38 | 3.65 | 4.30 | 2.47 | 3.79 | 3.72 |
| *Oryza sativa* | Germination rate (%) | 90 | 60 | 52 | 0 | 0 | 0 |
| | Radicle length (cm) | 2.02 | 0.60 | 0.59 | 0 | 0 | 0 |
| | Embryo length (cm) | 1.15 | 1.02 | 0.67 | 0 | 0 | 0 |

The results in Table 9 suggest that at certain concentrations, the mixture of tenuazonic acid and iso-tenuazonic acid inhibits seed germination of weeds, such as Digitaria sanguinalis, Echinochloa crusgalli var. praticola and crops, such as rice and wheat, but has little effect on the seed germination of soybean; which can be regarded as the base of the use range of tenuazonic acid and iso-tenuazonic acid as a bioherbicide.

## Claims

1. A method of biocontrol of weeds using tenuazonic acid, iso-tenuazonic acid and/or their salts comprising: purifying tenuazonic acid, iso-tenuazonic acid and/or their salts from the crude mixtures of metabolites of solid or fluid cultural *Alternaria alternata* by column and thin layer chromatography; optionally adding adjuvants to improve the weed killing activity; and spraying the purified tenuazonic acid, iso-tenuazonic acid and/or their salts on stems and leaves of weeds at concentrations between 5 and 800 µg/g causing the weeds to exhibit disease symptoms and death within five days of spraying.

2. The method of claim 1, wherein the salts are selected from calcium tenuazonate, calcium iso-tenuazonate, magnesium tenuazonate, magnesium iso-tenuazonate, copper tenuazonate, copper iso-tenuazonate, iron tenuazonate, iron iso-tenuazonate, sodium tenuazonate, sodium iso-tenuazonate, potassium tenuazonate, potassium iso-tenuazonate, and novel compounds of calcium tenuazono iso-tenuazonate, magnesium tenuazono iso-tenuazonate, copper tenuazono iso-tenuazonate, and iron tenuazono iso-tenuazonate.

3. The method of claim 1, wherein the weeds are selected from main broad leaf weeds, grassy weeds and sedge weeds, showing a broad-spectrum of weed killing activity.

4. The method of claim 1, wherein the adjuvants which will improve the weed killing activity are selected from sodium dodecylsulfonate, NS GL-110, laurocapram, and little 4204.
